# EUROPEAN PATENT APPLICATION

(11) **EP 4 227 264 A1**
(43) Date of publication of application: **16.08.2023**
(21) Application number: 21877698.7
(22) Date of filing: 07.10.2021
(51) Int. Cl.: C01B 33/12, C01B 33/157, C01B 33/159, C01B 33/18

(54) **TWO-PHASE BICONTINUOUS SILICA STRUCTURE AND METHOD FOR PRODUCING SAME**

(30) Priority: 09.10.2020 WO PCT/JP2020/038234
(71) Applicant: DIC Corporation, Tokyo 174-8520 (JP)
(72) Inventor: WATANABE, Takanori, Sakura-shi, Chiba 285-8668 (JP); DOHI, Tomoki, Sakura-shi, Chiba 285-8668 (JP); YUAN, Jianjun, Sakura-shi, Chiba 285-8668 (JP)
(74) Representative: TBK
(86) International application number: PCT/JP2021/037099
(87) International publication number: WO 2022/075399

(57) **Abstract**

A two-phase bicontinuous silica structure includes a phase containing silica as a main component and an air phase. The silica has a Q4 bond as a chemical bond, a content of molybdenum in the whole amount of the two-phase bicontinuous silica structure is 2.0% by mass or less, and the phase containing silica as a main component is amorphous.

## Description

### Technical Field

The present invention relates to a two-phase bicontinuous silica structure and a method for producing the structure.

This application claims priority from International Application No. PCT/JP2020/038234, filed in Japan on October 9, 2020, the content of which is incorporated herein by reference.

### Background Art

Porous materials such as a macroporous material and a mesoprous material are used in many applications. The porous materials are used in wide industrial fields for an adsorbent, a separation material, a catalyst carrier, a resin filler, an electrode material of a battery, a solid electrolyte, and the like. Since diffusion and transport of a substance requires chemical modification and the like in micropores, in particular, attention has been focused as a next-generation porous material on a mesh bicontinuous structure that has a three-dimensional network skeleton and a penetrating cavity tunnel (through hole) and in which a phase of a substrate material and a phase of air are continuous to each other. The bicontinuous structure has been expected for application to a high-performance material.

From such a situation, attention has been paid to synthesis in which silica that is an inorganic material having excellent heat resistance and chemical resistance forms a skeleton of a porous bicontinuous structure. A known simple method is, for example, a method in which a mixture of silicic anhydride and inorganic salt is heated to a temperature equal to or higher than the melting point of the inorganic salt to form a bicontinuous structure due to spinodal decomposition, and the inorganic salt is removed to form a porous silica-based bicontinuous structure (for example, see PTL 1). Furthermore, it is reported that by phase separation based on spinodal decomposition with a sol-gel reaction of alkoxysilane, a silica-based bicontinuous structure having uniform micropores is obtained (for example, see NPL 1). Silica gel having such a porous structure is widely used as a filler for a HPLC column.

### Citation List

### Patent Literature

PTL 1: Japanese Unexamined Patent Application No. S61-122173
PTL 2: Japanese Unexamined Patent Application No. 2014-19591

### Non Patent Literature

NPL 1: Nakanishi et al., J. Porous Mater., 1997, 4, 67-112

### Summary of Invention

### Technical Problem

However, the conventional chemical structure of silica or silica gel necessarily has many silanol (Si-OH) groups. Therefore, a silica-based material generally has low alkali resistance and hydrothermal stability, and is hardly used under an alkaline condition or in a high-temperature water vapor atmosphere. The silanol group on a surface of silica or silica gel is always bonded to a water molecule, and therefore the surface indicates strong hydrophilicity. Accordingly, it is difficult that the silica-based material is composited directly with a hydrophobic polymer unless chemical surface modification is performed.

In order to solve the problem, a two-phase bicontinuous silica structure includes silica that does not substantially have a silanol group and has a Q4 bond, and a cavity, and a method for producing the same are reported (for example, see PTL 2). However, a two-phase bicontinuous silica obtained by this method is crystalline silica. It is known that the crystalline silica is highly noxious and risk of carcinogenesis is increased by inhalation of dust containing the crystalline silica. For example, Japan Society for Occupational Health defines the crystalline silica as carcinogenic substance classification Group 1 "substance capable of being determined to be carcinogenic to humans", and carcinogenesis classification defined by International Agency for Research on Cancer (IARC) classifies the crystalline silica into Group 1 "carcinogenic substance".

The present invention has been made in view of the circumstances, and an object of the present invention is to provide a two-phase bicontinuous silica structure including silica that does not substantially have a silanol group, has low harmfulness, and has a Q4 bond, and a cavity, and a method for producing the same.

### Solution to Problem

The present invention encompasses the following aspects.
(1) A two-phase bicontinuous silica structure including a phase containing silica as a main component and an air phase, wherein the silica has a Q4 bond as a chemical bond, a content of molybdenum in the whole amount of the two-phase bicontinuous silica structure is 2.0% by mass or less, and the phase containing silica as a main component is amorphous.
(2) The two-phase bicontinuous silica structure according to (1), wherein a content of a molybdenum compound in the total amount of raw materials for the two-phase bicontinuous silica structure is 15% by mass or less.
(3) The two-phase bicontinuous silica structure according to (1) or (2), wherein the air phase has a diameter of 10 to 1,000 nm.
(4) The two-phase bicontinuous silica structure according to any one of (1) to (3), wherein the phase containing silica as a main component is formed from a nanowire having a thickness of 5 to 1,000 nm.
(5) The two-phase bicontinuous silica structure according to any one of (1) to (4), wherein the two-phase bicontinuous silica structure has a specific surface area of 0.1 to 200 m²/g.
(6) The two-phase bicontinuous silica structure according to any one of (1) to (5), wherein the phase of the two-phase bicontinuous silica structure containing silica as a main component contains 5% by mass or less of molybdenum oxide.
(7) The two-phase bicontinuous silica structure according to any one of (1) to (6), wherein the two-phase bicontinuous silica structure is a spherical particle having a particle diameter of 1 to 100 um.
(8) A method for producing the two-phase bicontinuous silica structure according to any one of (1) to (7), the method including: a step (I) of mixing precursor silica (X) with a molybdenum compound (Y) to obtain a mixture (A); and a step (II) of heating the mixture (A) obtained in the step (I) at 600 to 1,000°C, wherein a content of the molybdenum compound (Y) in the whole amount of the mixture (A) is 15% by mass or less in terms of molybdenum oxide, and a vapor of molybdenum oxide produced by the heating functions as a dehydration catalyst of silanol to form a silica that has a Q4 bond as a chemical bond.

### Advantageous Effects of Invention

The present invention can provide an amorphous two-phase bicontinuous silica structure including silica that does not substantially have a silanol group and has a Q4 bond, and a cavity, and a method for producing the same. Since the two-phase bicontinuous silica structure of the present invention is amorphous, the two-phase bicontinuous silica structure has low harmfulness and can be used in various types of applications.

### Brief Description of Drawings

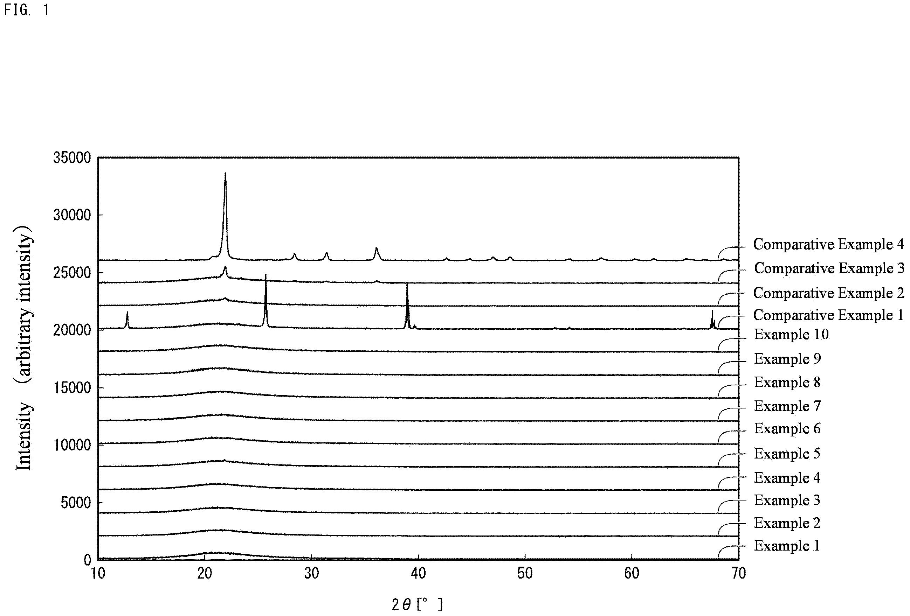

FIG. 1 is an XRD spectrum of two-phase bicontinuous silica structure obtained in each of Examples and Comparative Examples.

### Description of Embodiments

In both industrial scale production and laboratory scale production of silica, a reaction is performed in the presence of water. In this case, the resulting silica necessarily has many silanol groups. Therefore, it is impossible to increase the content of Q4 structure by a current production route of silica. An embodiment of the present invention is based on use of silica itself obtained by a known silica synthesis method as a precursor raw material and a dehydration reaction from a Si-OH group in a solid state of the silica. However, it is impossible to perform the reaction only by high-temperature heating. Therefore, a procedure in which a vapor of metal oxide is caused to permeate a vicinity of the silanol group using the affinity of the silica with a molybdenum compound indicating high-temperature sublimation, and as a result, the silica is reduced (the molybdenum compound functions as a dehydration catalyst of silanol) is conceived. As a result, it is found that the silica has a Q4 bond as a chemical bond, and a cavity tunnel passes through a structure from the outer surface to the whole inside thereof, and two phases including a silica phase and an air phase are continuous to each other.

In the embodiment, a specific amount of a molybdenum compound is reacted with silica under a specific temperature condition. In this case, a two-phase bicontinuous silica structure in which a phase containing silica as a main component is amorphous is found.

The two-phase bicontinuous silica structure of the embodiment may contain a small amount of molybdenum oxide that remains on a silica surface without subliming. In that context, "containing silica as a main component" means that silica occupies 85% by mass or more, and preferably 90% by mass or more of a solid portion forming the structure. Hereinafter, the present invention will be described in detail.

### [Precursor Silica (X)]

Silica used as a precursor in the embodiment is not particularly limited as long as it is amorphous silica. For example, an artificially synthetic silica-based material such as silica gel, silica nanoparticles, or mesoporous silica, or silica present in nature such as biosilica can be used.

The specific surface area of a precursor silica (X) is also not particularly limited. The specific surface area is preferably 10 m²/g or more, and more preferably 100 m²/g or more since the air phase can be easily formed as a continuum (through hole).

The shape of the precursor silica (X) is also not particularly limited. It is preferable that the shape of the precursor silica (X) be appropriately selected according to a purpose since the two-phase bicontinuous silica structure can be formed while the whole shape in a micron size or more is maintained without deformation. For example, the precursor silica in a spherical shape, an amorphous shape, a shape of a structure with an aspect (wire, fiber, ribbon, tube, etc.), a sheet shape, or the like may be suitably used.

The whole size of the precursor silica (X) is also not particularly limited. For example, when silica particles with a micron size or more are used, the bicontinuous silica structure can be formed while the size of each of the particles is maintained. When silica particles with a small particle diameter are used, the particles can be aggregated to form a large bicontinuous silica structure.

The precursor silica (X) may include only silica or be a complex of silica and an organic compound. For example, an organic-inorganic complex obtained by modifying silica with organic silane, a silica complex in which a polymer is adsorbed, or the like may be suitably used. When the complexes are used, the content of the organic compound is not particularly limited. From the viewpoint of efficiently producing the two-phase bicontinuous silica structure, the content is preferably 60% by mass or less, and more preferably 30% by mass or less.

### [Molybdenum Compound (Y)]

In the embodiment, use of a molybdenum compound (Y) is essential for a silica structure having a Q4 bond. The molybdenum compound may be molybdenum oxide or a compound containing an acid anion (MOₓⁿ⁻) in which molybdenum metal is bonded to oxygen.

The compound containing an acid anion (MOₓⁿ⁻) in which molybdenum metal is bonded to oxygen is not particularly limited as long as it can be converted to molybdenum oxide by high-temperature firing. For example, molybdic acid, H₃PMo₁₂O₄₀, H₃SiMo₁₂O₄₀, NH₄Mo₇O₁₂, or the like may be suitably used. Among these compounds, molybdenum oxide is preferably used as it is from the viewpoint of cost.

### [Mixing and Firing]

In the embodiment, when the precursor silica (X) is mixed with the molybdenum compound and a mixture (A) is then fired, a silanol group is substantially eliminated, and the two-phase bicontinuous silica structure that includes a phase containing silica as a main component having a Q4 bond and an air phase is formed.

The preparation ratio of the molybdenum compound (Y) in terms of molybdenum oxide relative to the precursor silica (X) in the mixture (A) is preferably 15% by mass or less, more preferably 1 to 15% by mass, further preferably 1.5 to 10% by mass, and yet further preferably 3 to 10% by mass. When the ratio of the molybdenum compound (Y) is within the preferable range, the phase containing silica as a main component is likely to be amorphous, and the two-phase bicontinuous silica structure is likely to be efficiently formed.

A process of preparing the mixture (A) is not particularly limited. For example, the process may be dry mixing without a solvent or wet mixing using a solvent.

The temperature in the firing is not limited as long as it is a temperature at which molybdenum oxide sublimes. Specifically, the temperature is preferably 600 to 1,000°C, more preferably 700 to 1,000°C, and further preferably 800 to 1,000°C. When the firing temperature is within the preferable range, the phase containing silica as a main component is likely to be amorphous, and the two-phase bicontinuous silica structure is likely to be efficiently formed.

When the preparation ratio of the molybdenum compound (Y) relative to the precursor silica (X) in the mixture (A) is 1 to 5% by mass, the firing temperature is preferably 600 to 1,000°C, more preferably 700 to 1,000°C, and further preferably 800 to 1,000°C.

When the preparation ratio of the molybdenum compound (Y) relative to the precursor silica (X) in the mixture (A) is more than 5% by mass and 15% by mass or less, the firing temperature is preferably 600 to 900°C, more preferably 700 to 900°C, and further preferably 800 to 900°C.

An atmosphere of the firing is not particularly limited as long as it is in the presence of oxygen. It is more preferably an air atmosphere from the viewpoint of safety and cost.

### [Two-Phase Bicontinuous Silica Structure]

When the mixture (A) of the precursor silica (X) with the molybdenum compound (Y) is fired at 600 to 1,000°C, molybdenum oxide forms an attached film on a surface of pores of the precursor silica (X). When such silica having an attached film on the surface is further fired at high temperature, molybdenum oxide sublimes, a silanol group in the silica is substantially eliminated, and the two-phase bicontinuous silica structure that includes a nano-sized cavity continued in (penetrating) the whole of the silica structure and a three-dimensional network skeleton of the silica having a Q4 bond is formed. That is, it is considered that in high-temperature firing, molybdenum oxide functions as a dehydration catalyst of the silanol group. In this case, when the use ratio of the precursor silica (X) to the molybdenum compound, the firing temperature, pore properties (the size and distribution of the pores) of the precursor silica (X), or the like is specified, desired chemical properties and nanostructure of the two-phase bicontinuous silica structure can be controlled.

In the two-phase bicontinuous silica structure of the embodiment, the phase containing silica as a main component is amorphous. That is, the two-phase bicontinuous silica structure of the embodiment does not substantially contain crystalline silica. Therefore, the two-phase bicontinuous silica structure of the embodiment has low harmfulness, and can be used in various types of applications.

In the two-phase bicontinuous silica structure of the embodiment, the content of molybdenum relative to the whole amount of the two-phase bicontinuous silica structure is 2.0% by mass or less. When the preparation ratio in the mixture (A) is appropriately selected such that the content of molybdenum relative to the whole amount of the two-phase bicontinuous silica structure is 2.0% by mass or less, the two-phase bicontinuous silica structure in which the phase containing silica as a main component is amorphous is obtained.

The content of molybdenum relative to the whole amount of the two-phase bicontinuous silica structure is preferably 0.5 to 1.9% by mass, more preferably 0.5 to 1.8% by mass, and further preferably 0.5 to 1.8% by mass. When the content of molybdenum relative to the whole amount of the two-phase bicontinuous silica structure is within the preferable range, the two-phase bicontinuous silica structure in which the phase containing silica as a main component is amorphous is likely to be obtained more reliably.

In the embodiment, the diameter of the air phase in the two-phase bicontinuous silica structure is 10 to 1,000 nm. In particular, the air phase with a diameter of 50 to 1,000 nm is suitably formed. By increasing the firing temperature, increasing the content of the molybdenum compound (Y) in the mixture (A), or using the precursor silica (X) that has a high specific surface area, the diameter of the cavity tunnel (air phase) in the two-phase bicontinuous silica structure can be increased.

The silica network in the two-phase bicontinuous silica structure of the embodiment is a three-dimensional network formed from a nanowire as a basic structure. The thickness of the nanowire is 5 to 1,000 nm. In particular, the nanowire with a thickness of 30 to 500 nm is suitably obtained. By increasing the firing temperature, increasing the content of the molybdenum compound in the mixture (A), or using the precursor silica (X) that has a high specific surface area, the thickness of the nanowire of silica in the two-phase bicontinuous silica structure can be increased.

The specific surface area of the obtained two-phase bicontinuous silica structure is very smaller than that of the precursor silica (X). The specific surface area of the obtained two-phase bicontinuous silica structure depends on the properties of the precursor silica (X) and the firing condition, and is 0.1 to 200 m²/g. The two-phase bicontinuous silica structure having a specific surface area of 0.1 to 50 m²/g is suitably obtained.

The most of the used molybdenum compound sublimes by the high-temperature firing treatment, to form the silica structure containing silica as a main component. The two-phase bicontinuous silica structure may contain a small amount of molybdenum oxide that does not completely sublime. The content of the molybdenum oxide is 5% by mass or less. In particular, when the firing time and the firing temperature are sufficient, the content thereof can be decreased to 1% by mass or less.

The shape of the two-phase bicontinuous silica structure of the embodiment is not particularly limited. The two-phase bicontinuous silica structure may be a spherical particle having a particle diameter of 1 to 500 um, preferably 1 to 100 µm, and more preferably 1 to 60 um. When the two-phase bicontinuous silica structure is a spherical particle having a particle diameter of 1 to 60 um, the two-phase bicontinuous silica structure is likely to be synthesized while the particle shape is maintained.

Herein, the particle diameter of the two-phase bicontinuous silica structure is measured with a laser diffraction-type particle size distribution meter HELOS(H3355)&RODOS, R3: 0.5/0.9-175 um (manufactured by Japan Laser Corporation) under drying conditions including a dispersion pressure of 3 bar and a pulling pressure of 90 mbar.

In the embodiment, when the two-phase bicontinuous silica structure is a spherical particle, the circularity of the spherical particle is preferably 0.7 or more, and more preferably 0.75 or more.

Herein, the circularities of 900 or more particles are determined from a SEM image with AI image analysis service "DeepCle" model 872 (manufactured by Sakai Chemical Industry Co., Ltd.), and the average of the circularities is used.

Molybdenum oxide in the two-phase bicontinuous silica structure forms an amorphous structure on an outer surface of the silica and inside the silica. The oxide can be removed by washing with an aqueous ammonia solution or an aqueous sodium hydroxide solution.

The molybdenum oxide functions as a dehydration catalyst at a high temperature, to form the two-phase bicontinuous silica structure. A bonding state can be confirmed by ²⁹Si-CP/MAS NMR measurement. The three-dimensional silica network itself in the two-phase bicontinuous silica structure is a structure having a Q4 bond, unlike typical silica. The three-dimensional silica network is similar to silica in quartz glass.

Typical silica gel contains a large amount of silanol group, and therefore has very low alkali resistance. In contrast, the two-phase bicontinuous silica structure of the embodiment does not substantially have a silanol group, and therefore indicates excellent alkali resistance. For example, even when the two-phase bicontinuous silica structure is left in an aqueous solution of 0.1 mol/L or less sodium hydroxide at room temperature (25 to 30°C) for 1 month, hydrolysis is not observed, and the initial state of the two-phase bicontinuous silica structure can be maintained.

The surface of silica wire in the two-phase bicontinuous silica structure is etched in an aqueous solution of sodium hydroxide having a high concentration of 0.1 mol/L or more, and the thickness of the wire that is a basic structure of the silica network can be decreased while the shape of the bicontinuous structure is maintained.

Since the structure of the embodiment does not substantially have a silanol group, the polarity of the surface of the structure is largely decreased. Therefore, water vapor is more unlikely to be adsorbed on the two-phase bicontinuous silica structure than the precursor silica (X).

Since the two-phase bicontinuous silica structure of the embodiment has such properties, the two-phase bicontinuous silica structure can be suitably used as a resin filler. That is, since the typical silica has high surface polarity based on the silanol group on the surface, it is difficult to uniformly mix the typical silica without surface modification in using the silica as a filler for a general-purpose polymer. In contrast, the silica structure having a Q4 structure of the embodiment can be used as it is as a filler. For example, in a complex of the two-phase bicontinuous silica structure and polymethyl methacrylate (PMMA), PMMA is diffused in the whole of the penetrating cavity (air phase), and a very uniform thin film can be formed on a nanowire surface that is the basic structure of the silica.

Since the two-phase bicontinuous silica structure of the embodiment is mechanically brittle, the two-phase bicontinuous silica structure that has an initial size of several millimeters or more can be simply pulverized into a powder of several nanometers with a dispersion device. Therefore, when the powder is used as a filler, the dispersibility in the resin is improved. This is effective in improving the transparency of a resin molded body to be obtained.

### [Example]

Hereinafter, the present invention will be further described in detail by the use of examples, but the present invention is not limited to the examples. Unless stated otherwise, the terms "%" means "% by mass".

### [Analysis by X-ray Diffraction]

A produced sample was placed and put in a measurement sample holder with a depth of 0.5 mm, made flat under a constant load, the measurement sample holder was set in a wide-angle X-ray diffraction (XRD) device such as Ultima IV manufactured by Rigaku Corporation, and measurement was performed under conditions including Cu/Kα radiation, 40 kV/40 mA, a scan speed of 2°/minute, and a scanning range of 10 to 70°.

### [Composition Analysis of Nanostructure of Two-Phase Bicontinuous Structure by X Ray Fluorescence]

About 70 mg of the produced sample was placed on a filter paper and covered with a PP film, and composition analysis was performed with a X ray fluorescence (XRF) analyzer Primus IV (manufactured by Rigaku Corporation).

### [Analysis of Shape of Two-Phase Bicontinuous Silica Structure with Scanning Electron Microscope]

A sample was fixed on a sample support stage with a double-coated tape, and observed with a surface view microscope VE-9800 manufactured by KEYENCE CORPORATION.

### [Analysis of Nanostructure of Two-Phase Bicontinuous Silica Structure with Transmission Electron Microscope]

The produced sample was placed on a carbon-evaporated copper grid, and observed as a cross section with a high resolution electron microscope EM-002B manufactured by TOPCON CORPORATION and VOYAGER M3055 manufactured by Noran Instruments Inc.

### [Evaluation of Chemical Bond in Two-Phase Bicontinuous Silica Structure by ²⁹Si CP/MAS NMR Measurement]

²⁹Si CP/MAS NMR measurement was performed with JNM-ECA600 manufactured by JEOL Ltd. For reference of chemical shift, measurement on polydimethyl silane was separately performed by a CP/MAS method, and the obtained peak was - 33.8 ppm.

### [Measurement of Particle Diameter]

The particle diameter was measured with a laser diffraction-type particle size distribution meter HELOS(H3355)&RODOS, R3: 0.5/0.9-175 um (manufactured by Japan Laser Corporation) under drying conditions including a dispersion pressure of 3 bar and a pulling pressure of 90 mbar.

### [Measurement of Circularity]

The circularities of 900 or more particles were determined from a SEM image with AI image analysis service "DeepCle" model 872 (manufactured by Sakai Chemical Industry Co., Ltd.), and the average of the circularities was used.

### [Firing Method]

Firing was performed with a firing furnace including ceramic electric tubular furnace ARF-100K equipped with AMF-2P type temperature controller manufactured by Asahi Rika Seisakusyo Co., Ltd.

### (Example 1)

### <Production and Firing of Mixture of Silica Gel with Molybdenum Oxide>

20 g of silica gel (silica gel 60 available from Kanto Chemical Co., Inc., spherical shape, average particle diameter: 40 to 50 µm) and 1 g of molybdenum oxide (available from Wako Pure Chemical Industries, Ltd.) were mixed in a mortar, to obtain 21 g of mixture (A-1) of precursor silica with molybdenum oxide. 21 g of the obtained mixture (A-1) was fired with an electric furnace at 8,000°C for 5 hours. The most of molybdenum oxide sublimed to obtain about 18.2 g of white powder. Subsequently, 18.2 g of the obtained white powder was dispersed in 150 mL of 0.25% ammonia water, the dispersion solution was stirred at room temperature (25 to 30°C) for 3 hours, the ammonia water was removed by filtration, and molybdenum remaining on the surface of the particles was removed by water-washing and drying. As a result, 17.3 g of powder of silica structure was obtained. By observation with a SEM and a TEM, it was confirmed that the obtained silica structure is a two-phase bicontinuous structure in which a cavity tunnel passes from the outer surface to the whole inside thereof and two phases including a silica phase and an air phase are continuous to each other.

²⁹Si CP/MAS NMR measurement was performed using the obtained powder of the two-phase bicontinuous silica structure. Peaks derived from Q2, Q3, and Q4 were not observed within the range of 80 ppm to 120 ppm. This suggests that a molybdenum oxide treatment completely eliminates a silanol group in the silica structure. The obtained silica structure is similar to quartz glass having only a Q4 bond.

The crystallinity of the obtained two-phase bicontinuous silica structure was analyzed by X-ray diffraction. As a result, the two-phase bicontinuous silica structure was confirmed to be amorphous.

The amount of molybdenum remaining in the obtained two-phase bicontinuous silica structure was analyzed by X ray fluorescence measurement. As a result, the amount of molybdenum in the two-phase bicontinuous silica structure was confirmed to be 1.23%.

### (Examples 2 to 10 and Comparative Examples 1 to 4)

Two-phase bicontinuous silica structures were obtained in the same manner as in Example 1 except that the amounts of mixed raw materials, an average particle diameter, firing temperature, and firing time were changed to conditions listed in Table 1. By observation with a SEM and a TEM, it was confirmed that the obtained silica structure is a two-phase bicontinuous structure in which a cavity tunnel passes from the outer surface to the whole inside thereof and two phases including a silica phase and an air phase are continuous to each other.

²⁹Si CP/MAS NMR measurement was performed using the powder of the two-phase bicontinuous silica structure obtained in each of Examples 2 to 10 and Comparative Examples 1 to 4. Peaks derived from Q2, Q3, and Q4 were not observed within the range of 80 ppm to 120 ppm.

The crystallinity of the two-phase bicontinuous silica structures obtained in Examples 2 to 10 and Comparative Examples 1 to 4 and the amount of remaining molybdenum were analyzed in the same manner as in Example 1. The results are listed in Table 1.

**[Table 1]**

| | Amount of mixed raw materials | | | | Firing conditions | |
|---|---|---|---|---|---|---|
| | Silica | | MoO₃ (g) | Mo amount (%) | Firing temperature (°C) | Firing time (Hr) |
| | Prepared amount (g) | Average particle diameter (µm) | | | | |
| Example 1 | 20 | 50 to 60 | 1 | 5 | 800 | 5 |
| Example 2 | 20 | 50 to 60 | 2 | 10 | 800 | 5 |
| Example 3 | 20 | 50 to 60 | 3 | 15 | 800 | 5 |
| Example 4 | 20 | 50 to 60 | 1 | 5 | 900 | 5 |
| Example 5 | 20 | 50 to 60 | 2 | 10 | 900 | 5 |
| Example 6 | 20 | 50 to 60 | 0.6 | 3 | 1000 | 5 |
| Example 7 | 20 | 50 to 60 | 1 | 5 | 1000 | 5 |
| Example 8 | 30 | 3 | 1.5 | 5 | 900 | 5 |
| Example 9 | 30 | 5 | 1.5 | 5 | 900 | 5 |
| Example 10 | 30 | 10 | 1.5 | 5 | 900 | 5 |
| Comparati ve Example 1 | 15 | 50 to 60 | 7.5 | 50 | 800 | 5 |
| Comparati ve | 15 | 50 to 60 | 3 | 20 | 900 | 5 |
| Example 2 | | | | | | |
| Comparati ve Example 3 | 20 | 50 to 60 | 2 | 10 | 1000 | 5 |
| Comparati ve Example 4 | 15 | 50 to 60 | 7.5 | 50 | 1000 | 5 |

**[Table 2]**

| | Two-phase bicontinuous silica structure | | | | | |
|---|---|---|---|---|---|---|
| | Crysta llinit y | Amount of remaini ng Mo (%) | Particle diameter (µm) | | | Circula rity |
| | | | D₁₀ | D₅₀ | D₉₀ | |
| Example 1 | A | 1.23 | 31.15 | 46.51 | 59.60 | 0.84 |
| Example 2 | A | 1.40 | 32.81 | 48.24 | 67.82 | 0.86 |
| Example 3 | A | 1.31 | 31.94 | 46.57 | 61.34 | 0.85 |
| Example 4 | A | 0.99 | 34.06 | 48.13 | 67.08 | 0.85 |
| Example 5 | A | 1.46 | 31.92 | 46.56 | 61.32 | 0.85 |
| Example 6 | A | 0.95 | 32.40 | 44.90 | 60.55 | 0.85 |
| Example 7 | A | 1.03 | 32.75 | 47.74 | 67.03 | 0.86 |
| Example 8 | A | 1.72 | 0.63 | 3.22 | 5.35 | 0.81 |
| Example 9 | A | 1.42 | 1.00 | 4.19 | 7.31 | 0.81 |
| Example 10 | A | 1.39 | 3.34 | 11.86 | 20.23 | 0.78 |
| Comparati ve Example 1 | A+C | 4.94 | 32.50 | 49.95 | 76.08 | - |
| Comparati ve | A+C | 1.63 | 22.72 | 46.58 | 64.99 | - |
| Example 2 | | | | | | |
| Comparati ve Example 3 | A+C | 1.15 | 22.34 | 45.86 | 61.26 | - |
| Comparati ve Example 4 | C | 2.01 | 14.21 | 44.67 | 69.83 | - |

In the tables, evaluation of the crystallinity is as follows.
A: a phase containing silica as a main component has an amorphous structure.
A+C: a phase containing silica as a main component has an amorphous structure and a crystalline structure.
C: a phase containing silica as a main component has a crystalline structure.

FIG. 1 is an XRD spectrum of the two-phase bicontinuous silica structure obtained in each of examples and comparative examples.

As confirmed from the results in Table 1 and FIG. 1, the two-phase bicontinuous silica structures in Examples 1 to 10 contain remaining molybdenum in an amount of 2.0% by mass or less and have the phase containing as a main component that has an amorphous structure.

Preferred examples of the present invention are described, but the present invention is not limited to the examples. Addition, omission, replacement, and modification of the components can be made without departing from the spirit of the present invention. The present invention is not limited to the description illustrated above, but is limited only to the appended claims.

## Claims

1. A two-phase bicontinuous silica structure comprising a phase containing silica as a main component and an air phase, wherein
the silica has a Q4 bond as a chemical bond,
a content of molybdenum in a whole amount of the two-phase bicontinuous silica structure is 2.0% by mass or less, and
the phase containing silica as a main component is amorphous.

2. The two-phase bicontinuous silica structure according to claim 1, wherein a content of a molybdenum compound in a total amount of raw materials for the two-phase bicontinuous silica structure is 15% by mass or less.

3. The two-phase bicontinuous silica structure according to claim 1 or 2, wherein the air phase has a diameter of 10 to 1,000 nm.

4. The two-phase bicontinuous silica structure according to any one of claims 1 to 3, wherein the phase containing silica as a main component is formed from a nanowire having a thickness of 5 to 1,000 nm.

5. The two-phase bicontinuous silica structure according to any one of claims 1 to 4, wherein the two-phase bicontinuous silica structure has a specific surface area of 0.1 to 200 m²/g.

6. The two-phase bicontinuous silica structure according to any one of claims 1 to 5, wherein the phase of the two-phase bicontinuous silica structure containing silica as a main component contains 5% by mass or less of molybdenum oxide.

7. The two-phase bicontinuous silica structure according to any one of claims 1 to 6, wherein the two-phase bicontinuous silica structure is a spherical particle having a particle diameter of 1 to 100 um.

8. A method for producing the two-phase bicontinuous silica structure according to any one of claims 1 to 7, the method comprising:
a step (I) of mixing precursor silica (X) with a molybdenum compound (Y) to obtain a mixture (A); and
a step (II) of heating the mixture (A) obtained in the step (I) at 600 to 1,000°C, wherein
a content of the molybdenum compound (Y) in a whole amount of the mixture (A) is 15% by mass or less in terms of molybdenum oxide, and
a vapor of molybdenum oxide produced by the heating functions as a dehydration catalyst of silanol to form a silica that has a Q4 bond as a chemical bond.
